Europäisches Patentamt

European Patent Office

Office européen des brevets

(19)

(11) Numéro de publication: **0 362 132**
**A1**

(12) **DEMANDE DE BREVET EUROPEEN**

(21) Numéro de dépôt: **89810671.1**

(22) Date de dépôt: **08.09.89**

(51) Int. Cl.5: **F16B 39/12 , //F16C35/063**

(30) Priorité: **12.09.88 CH 3392/88**

(43) Date de publication de la demande:
**04.04.90 Bulletin 90/14**

(84) Etats contractants désignés:
**BE CH DE ES FR GB IT LI SE**

(71) Demandeur: **SKB Fabrique de roulements, Bienne SA**
**Solothurnstrasse 66/68**
**CH-2504 Bienne(CH)**

(72) Inventeur: **Crochat, André**
**17, Chemin du Crêt**
**2533 Evilard(CH)**
Inventeur: **Beutler, Fred**
**5, Chemin des Alouettes**
**2525 Le Landeron(CH)**

(74) Mandataire: **Fischer, Franz Josef et al**
**c/o Bovard AG Optingenstrasse 16**
**CH-3000 Bern 25(CH)**

(54) **Dispositif de blocage.**

(57) L'écrou (1) et le contre-écrou (2) possèdent respectivement une portée cylindrique (3) et une creusure cylindrique (4), coopérant entre elles, et dont l'axe (9) est excentré par rapport à celui (8) du taraudage. Le blocage se fait par maintien de l'écrou (1) en position et par rotation simultanée du contre-écrou (2), ceci provoquant un rattrapage du jeu (10) sur deux surfaces antagonistes, ce qui crée une force de cisaillement bloquant les deux éléments (1, 2) sur une tige filetée (11) par exemple. En position bloquée, un jeu (7) subsiste, empêchant l'apparition d'une contrainte axiale dans la tige filetée (11).

*FIG. 2*

EP 0 362 132 A1

## Dispositif de blocage

Les écrous usuels sont bloqués par serrage de leur surface d'appui à l'aide d'un contre-écrou, l'appui se faisant donc sur les surfaces antagonistes de l'écrou et du contre-écrou, ainsi que sur les flancs de l'hélice du filetage; on utilise également des rondelles-freins ou des étriers. Cependant, ces modes de serrage conventionnels ne sauraient convenir au montage de vis à billes sur des machines-outils, par exemple, domaine où les exigences de précision, de même que les précharges fixées, ne doivent pas se modifier, soit en cours de montage, soit en cours de fonctionnement. De même, l'utilisation de tels systèmes conventionnels dans le domaine d'utilisation de roulements à précontrainte axiale réglable ne saurait être envisagée, ceci principalement pour les raisons suivantes : le jeu ou la précharge fixée risque de se modifier lors du serrage du contre-écrou ou en cours de fonctionnement; de plus, la surface d'appui de l'écrou contre le roulement n'est pas rigoureusement perpendiculaire à l'axe de l'arbre, une force de composante axiale, qui nuit à la précharge fixée, apparaît dans un blocage usuel par écrou contre-écrou.

Le brevet anglais GB 1 547 585 de même que la demande de brevet allemande DE 36 40 668 décrivent des systèmes de blocage à deux éléments et se caractérisent par la présence de projections, respectivement de logements tronconiques excentrés permettant le blocage par cisaillement sur une tige filetée de l'écrou et du contre-écrou. Cependant, il apparaît, dans chacune de ces inventions, une force de composante axiale due à la forme et à l'angle des deux parties coopérantes. Les brevets français FR 1.217.394 et 744.039 présentent, eux aussi, des dispositifs assez semblables à celui proposé ici, mais, de par leur construction, ces dispositifs ne permettent pas d'éviter l'apparition de contraintes axiales dans la tige filetée sur laquelle ils sont fixés. Le brevet anglais GB 9 274 présente, lui aussi, un dispositif de blocage dont la fabrication est plus compliquée et le mode de fonctionnement différent du dispositif présenté ici, dans la mesure où un filetage/taraudage est prévu entre les deux parties coopérantes.

Le but de la présente invention est de réaliser un dispositif de blocage comportant un écrou taraudé qui pallie les inconvénients cités ci-dessus.

A cet effet, le dispositif de blocage comporte un écrou taraudé s'engageant sur une tige filetée et est constitué de deux parties distinctes, dont l'une est équipée sur l'une de ses faces d'un prolongement cylindrique dont l'axe présente une excentricité e par rapport à l'axe du taraudage, l'autre partie présentant sur l'une de ses faces une creusure cylindrique dont l'axe présente au moins approximativement la même excentricité e par rapport à l'axe du taraudage et dont le diamètre intérieur correspond au diamètre extérieur dudit prolongement de l'autre partie, de telle sorte que l'enveloppe dudit prolongement puisse coopérer avec ladite creusure, caractérisé en ce qu'un jeu subsiste lorsque le dispositif est en position bloquée, entre la partie supérieure du prolongement cylindrique de la première partie et le fond de la creusure cylindrique de la seconde partie.

D'autres caractéristiques de l'invention ressortiront de la description détaillée de l'objet de l'invention en se référant au dessin annexé dans lequel

la fig. 1 est une vue frontale d'une forme d'exécution de l'objet de l'invention,

la fig. 2 est une coupe axiale de la même forme d'exécution de l'objet de l'invention,

la fig. 3 est une coupe axiale de la même forme d'exécution de l'invention, celle-ci étant vissée librement sur une tige filetée,

la fig. 4 est une coupe axiale de la même forme d'exécution de l'invention dans laquelle le dispositif est montré dans sa position de blocage sur une tige filetée.

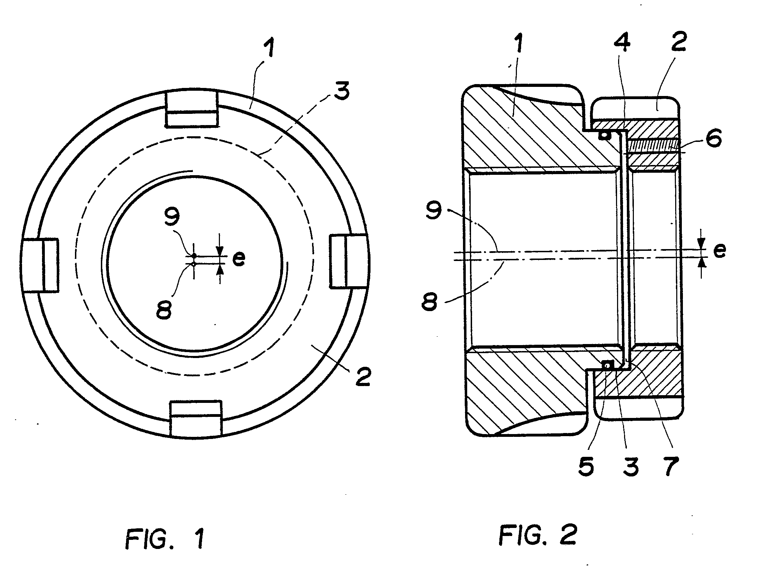

La fig. 1 montre les deux éléments principaux constituant le dispositif de blocage, objet de l'invention, à savoir l'écrou 1 et l'élément de blocage 2 engagés sur la portée excentrique 3 d'axe 9 et d'excentricité e par rapport à l'axe 8 des taraudages. Sur cette figure, les taraudages sont coaxiaux.

La fig. 2 est une coupe axiale du dispositif de blocage qui montre de manière plus explicite le principe de fonctionnement et de réalisation du dispositif. Comme on le voit à la figure, l'écrou 1 possède une portée excentrique 3 d'axe 9 et d'excentricité e par rapport à l'axe 8 du taraudage. L'élément de blocage 2, lui, possède une creusure 4 excentrique destinée à coopérer avec la portée 3, son excentricité e par rapport à l'axe du taraudage 8 permet, dans la position dessinée, d'obtenir les taraudages de chaque élément situé autour du même axe 9. Dans cette configuration, l'écrou 1 et l'élément de blocage 2 peuvent être vissés sur une tige filetée, par exemple. De plus, l'écrou 1 possède une gorge dans laquelle est logé un joint torique 5 ou tout autre moyen de friction destiné à pouvoir visser les deux éléments 1 et 2 simultanément sur une tige filetée, tout en permettant ensuite la rotation indépendante de l'élément de blocage 2 lorsque l'écrou sera en position correcte de montage. Il existe également un jeu 7 entre les deux éléments, ceci afin d'éviter que les deux éléments entrent en contact lors du blocage et engendrent une force axiale. Il est à noter que les taraudages des deux éléments sont, de préférence, réalisés en une seule opération, ceci afin de garantir leur alignement.

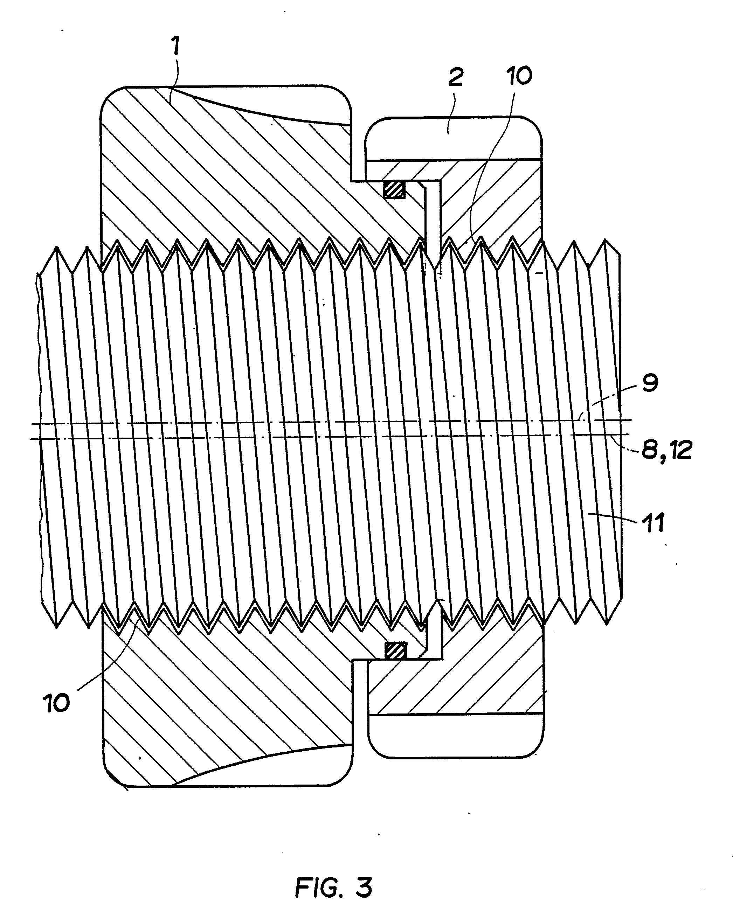

La fig. 3 montre de manière exagérée le jeu 10 qui existe lorsque l'on visse simultanément les éléments 1 et 2 sur une tige filetée 11. Lors de cette opération, l'axe des taraudages 8 des deux éléments coïncide avec l'axe de la tige filetée 12; de même, l'axe 9 représente également l'axe de la portée 3 et de la creusure 4 coïncidant avec ledit axe 9.

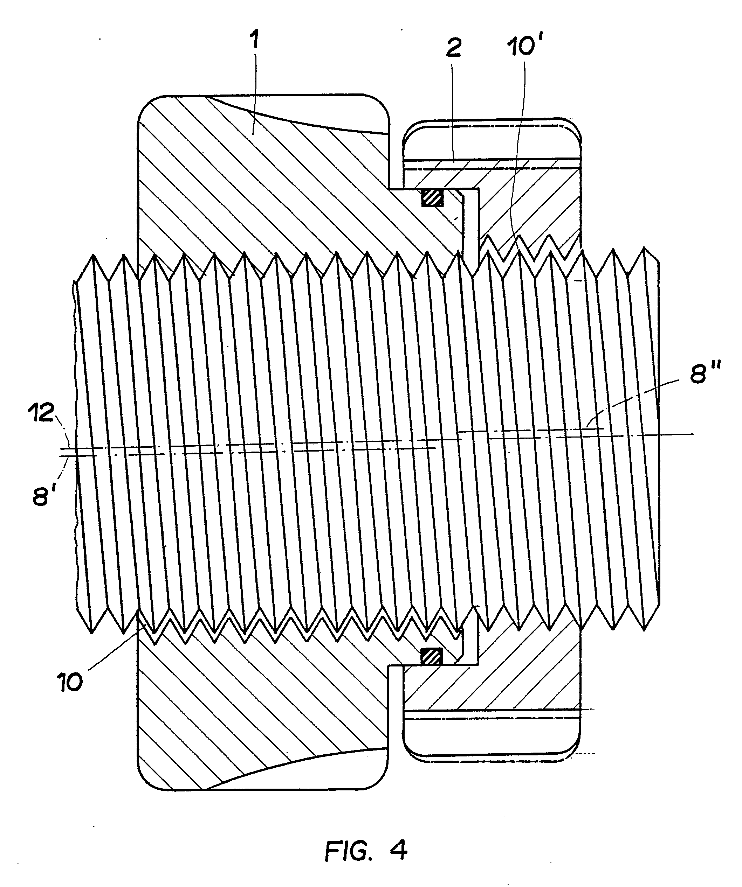

La fig. 4 montre le dispositif en position de blocage. Lorsque l'écrou est correctement positionné et que, le cas échéant, il a été soumis à un couple de serrage correspondant à un serrage ou à un réglage de précontrainte sur un élément de machine, un ressort ou un roulement par exemple, il suffira alors de maintenir l'écrou en position et de visser le moyen de blocage 2, ce qui aura pour effet, par translation de son axe 8″ de son taraudage autour de l'axe 12 de la tige filetée, de provoquer une translation équivalente de l'axe 8′ de l'écrou. La conséquence de cette translation d'axes de part et d'autre de l'axe 12 de la tige filetée est de rattraper sur des surfaces antagonistes le jeu 10 qui existait entre le taraudage du dispositif et le filetage de la tige, et de provoquer un effet de cisaillement sur la tige filetée, assurant par-là le blocage des deux éléments du dispositif sur la tige filetée. L'excentricité e sera relativement faible, mais supérieure à l'ordre de grandeur du jeu 10, de telle manière que la pente de la rampe de coincement soit également faible et que le dispositif reste immobilisé dans sa position bloquée après serrage. On voit donc que le blocage s'effectue par cisaillement et n'introduit pas de composante axiale. On peut également prévoir des moyens de sécurisation supplémentaires tels que des vis par exemple, vissées dans le taraudage 6 (voir fig. 1) et s'appuyant sur la surface latérale de l'écrou 1.

Des résultats très satisfaisants ont été obtenus avec un écrou et un élément de blocage, objet de l'invention, qui présentaient un taraudage de M 25 x 1,5 et une excentricité e de 1 mm.

Il est également possible, lors d'applications avec des roulements ou paliers, de substituer un ou les deux éléments de roulement ou de palier par un dispositif, objet de l'invention, dont l'écrou serait spécialement usiné et conçu, afin de jouer le rôle d'un des éléments de roulement ou de palier. Cet agencement permettant, entre autre, un gain de place dans l'installation de tels roulements ou paliers.

## Revendications

1. Dispositif de blocage comportant un écrou taraudé s'engageant sur une tige filetée et constitué de deux parties distinctes, dont l'une est équipée sur l'une de ses faces d'un prolongement cylindrique dont l'axe présente une excentricité e par rapport à l'axe du taraudage, l'autre partie présentant sur l'une de ses faces une creusure cylindrique dont l'axe présente au moins approximativement la même excentricité e par rapport à l'axe du taraudage et dont le diamètre intérieur correspond au diamètre extérieur dudit prolongement de l'autre partie, de telle sorte que l'enveloppe dudit prolongement puisse coopérer avec ladite creusure, caractérisé en ce qu'un jeu (7) subsiste, lorsque le dispositif est en position bloquée, entre la partie supérieure du prolongement cylindrique de la première partie et le fond de la creusure cylindrique de la seconde partie.

2. Dispositif de blocage selon la revendication 1, caractérisé en ce qu'un joint torique (5) permet la rotation simultanée des deux parties lors de leur engagement sur une tige filetée.

3. Dispositif de blocage selon les revendications 1 ou 2, caractérisé en ce que l'une ou l'autre des parties comporte des moyens de retenue destinés à assurer le blocage du dispositif.

4. Dispositif de blocage selon la revendication 3, caractérisé en ce que lesdits moyens sont constitués d'une ou plusieurs vis disposées axialement dans l'une des faces latérales extérieures de l'une ou l'autre des parties.

5. Utilisation du dispositif de blocage selon l'une des revendications 1 à 4, pour la fixation d'un palier à roulement sur un arbre.

6. Utilisation du dispositif de blocage selon la revendication 5, caractérisée en ce que l'écrou fait partie intégrante d'un ou des composants du roulement.

FIG. 1

FIG. 2

FIG. 3

EP 0 362 132 A1

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A- 953 918 (JOUANNEAU)<br>* Page 1, lignes 42-51; figures 1-3 *<br>--- | 1-6 | F 16 B  39/12 //<br>F 16 C  35/063 |
| X | FR-A- 382 968 (CARPENTIER)<br>* Page 1, lignes 1-31; page 1, ligne 39<br>- page 2, ligne 38; figures 1-4 *<br>--- | 1-6 | |
| X | FR-A- 614 841 (GUIDUCCI)<br>* Page 2, lignes 8-34; figure 1 *<br>--- | 1-6 | |
| D,X | GB-A-    9 274 (PHILLIPS AND PHILLIPS)(A.D.1912)<br>* Page 2, ligne 37 - page 3, ligne 5;<br>figure 1 *<br>--- | 1-6 | |
| A | FR-A- 966 224 (PHILIPPE)<br>* En entier *<br>--- | 2 | |
| A | US-A-3 870 092 (RUSK)<br>* Résumé; figure 1 *<br>--- | 4 | |
| A | FR-A-2 404 143 (SHUR-LOK)<br>* Figure 6 *<br>--- | 5,6 | DOMAINES TECHNIQUES RECHERCHES (Int. Cl.5)<br><br>F 16 B<br>F 16 C |
| A | DE-A-2 852 179 (SCHAEFFLER)<br>* Revendications 1,3; figure *<br>--- | 6 | |
| D,A | GB-A-1 547 585 (Z. TUCHIKAWA)<br>--- | | |
| D,A | DE-A-3 640 668 (K.K. SUIKEN)<br>--- | | |
| D,A | FR-A-1 217 394 (DELVAUX)<br>--- | | |
| D,A | FR-A- 744 039 (NOLLOT)<br>----- | | |

**Le présent rapport a été établi pour toutes les revendications**

| Lieu de la recherche | Date d'achèvement de la recherche | Examinateur |
|---|---|---|
| LA HAYE | 27-12-1989 | VAN DER WAL W |